(19) Europäisches Patentamt / European Patent Office / Office européen des brevets

(11) **EP 4 220 227 A1**

(12) **EUROPEAN PATENT APPLICATION**
published in accordance with Art. 153(4) EPC

(43) Date of publication:
**02.08.2023 Bulletin 2023/31**

(21) Application number: **20954949.2**

(22) Date of filing: **11.11.2020**

(51) International Patent Classification (IPC):
**G01S 17/32** (2020.01)　　　**G01S 7/4911** (2020.01)
**G01S 7/4914** (2020.01)

(86) International application number:
**PCT/CN2020/127983**

(87) International publication number:
**WO 2022/062105 (31.03.2022 Gazette 2022/13)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(30) Priority: **28.09.2020　CN 202011045282**

(71) Applicant: **China Science Photon Chip (Haining)
Technology Co., Ltd.
Haining Jiaxing, Zhejiang 314400 (CN)**

(72) Inventors:
• **LIU, Jingwei**
　**Jiaxing, Zhejiang 314400 (CN)**
• **TIAN, Chengcai**
　**Jiaxing, Zhejiang 314400 (CN)**
• **LI, Wenling**
　**Jiaxing, Zhejiang 314400 (CN)**

(74) Representative: **J A Kemp LLP
80 Turnmill Street
London EC1M 5QU (GB)**

(54) **ARRAY COHERENT RANGING CHIP AND SYSTEM THEREOF**

(57)　Disclosed by the present application are an array coherent ranging chip and a system thereof. The chip includes a modulated light source unit (101), an on-chip emission unit (102) and a reception array (103). The modulated light source unit (101) is used for generating a modulated light beam and splitting the modulated light beam into signal light and reference light, and then outputting the signal light and the reference light. The on-chip emission unit (102) is used for irradiating the signal light onto a target object at a preset divergence angle so as to have the signal light reflected to form multi-angle signal light. The reception array (103) is used for receiving the reference light and the multi-angle signal light and respectively performing conversion and detection on both the reference light and the signal light of each angle so as to obtain a plurality of ranging signals. The present application implements the laser ranging by employing the form of a chip, whereof the structure is compact, the reliability is high, and the cost in ranging is reduced. In a way of coherent ranging that employs reference signal and reflected signal at the same time, the choice of a proper reference power can implement the control on signal amplitude, thereby the range of ranging is able to be extended, which provides the effect of ambient light interference resistance, and enables parallel processing of data on multiple pixels by receiving multi-angle reflected lights at the same time.

FIG. 1

**Description**

**Technical Field**

The present application relates to the technical field of the LiDAR, and specifically relates to an array coherent ranging chip and a system thereof.

**Background**

LiDAR (Laser detection and ranging) is a remote sensing technology that has a broad and irreplaceable application in the fields of automatic pilot, virtual/augmented reality, optical communication, etc., which completes the detection on the distance from a to-be-measured object by irradiating a laser beam of a specific wavelength and direction onto the to-be-measured object, and measuring the returned signal.

At present, there are two main principles of LiDAR ranging. The first one is the time-of-flight method, which determines the distance from an object by detecting the time delay between the emitted and received optical pulses. However, the disadvantages of this method are that the ranging distance is relatively short, and this method can only implement single-point measurement, and is of a very low interference resistance. The second one is coherent detection, and according to the different laser modulation methods, there are several relatively common solutions such as the frequency modulated continuous wave (FMCW) and the chirped amplitude modulation (CAM). The advantage of this method is that it has a high environmental interference resistance and does not require high light source power.

In the related art, in order to make the LiDAR system have a large field-of-view angle and a small divergence angle, it is necessary to properly process the signal light to be output. Generally, there are three types included in the methods for the processing: flashes, MEMS micromirrors and optical phased arrays (OPAs). Wherein, there is neither a mechanical movement nor a rotational structure included in the solutions of optical phase arrays or flashes, which enables LiDARs to have the advantages of high reliability and a compact structure.

As a sophisticated solution, flashes implement emissions at and receptions from multiple angles within field-of-view at the same time by means of a wide-emission-angle light source and a sensor array, so as to obtain the distance information on the basis of the time-of-flight method (TOF). However, the total power of the light source output is limited by the safety power limit for human eyes, and because of the simultaneous emitting from the light source at multiple angles, the emitting power within a unit angle is limited, and since the intensity of optical signal reflected by an object has an inverse-square relationship with the distance from the object, whereas the time-of-flight sensor array can only identify signals above the noise threshold, the ranging distance is limited.

On the other hand, if the ambient light contains a component having the emission wavelength, environmental interference and superposition of signals may lead to saturation of the sensors and make the sensors unable to identify the target signal. Thus, the solution of flashes that is based on the time-of-flight method is very susceptible to the environmental light.

**Summary of the Invention**

In light of that, embodiments of the present application provide an array coherent ranging chip and a system thereof to solve the technical problem that ranging by the LiDAR is limited and the interference resistance is poor in the related art.

Provided by a first aspect of embodiments of the present application is an array coherent ranging chip, which includes a modulated light source unit, an on-chip emission unit and a reception array. The modulated light source unit is used for generating a modulated light beam and splitting the modulated light beam into signal light and reference light, and then outputting the signal light and the reference light. The on-chip emission unit is used for irradiating the signal light onto a target object at a preset divergence angle so as to have the signal light reflected to form multi-angle signal light. The reception array is used for receiving the reference light and the multi-angle signal light and respectively performing conversion and detection on both the reference light and the signal light of each angle so as to obtain a plurality of ranging signals.

Optionally, the reception array may include a plurality of reception units, and each of the reception units includes a diffraction structure, a light combination assembly and a sensor. The diffraction structure may be configured to receive reflected light of a corresponding angle and guides the reflected light of the corresponding angle to an input end of the light combination assembly. The light combination assembly may be configured to receive the reference light and the reflected light of the corresponding angle, combine the reference light and the reflected light of the corresponding angle into a composite signal, and divide the composite signal into a first detection signal and a second detection signal. The sensor may be configured to receive the first detection signal and the second detection signal, convert the first detection signal and the second detection signal into electric signals, and output a difference between the electric signals to obtain the ranging signals. Optionally, the reception array may further include a first beam splitting region. The first beam splitting region may include a plurality of beam splitting units. The first beam splitting region may receive the reference light and perform a beam splitting thereon, and then respectively transmit the split beams from the reference light into the light combination assembly of each of the reception units.

Optionally, an operating wavelength range of the modulated light source unit may include a visible band and a near-infrared band.

Optionally, the diffraction structure may include a one-dimensional or two-dimensional diffractive optical element. The light combination assembly may include any one of a diffractive optical element, a diffraction grating, a metasurface, a Y-branch, a multimode interference coupler, a directional coupler, a star coupler and a polarizing beamsplitter. The sensor may include any one of an avalanche photodiode, a photomultiplier tube and a PIN diode.

Optionally, the modulated light source unit may include a modulation unit and a beam splitting unit. The modulation unit may include a light source and a signal generator. The light source may have a modulation manner which is external modulation or internal modulation. When the amplitude modulation is implemented based on a principle of external modulation, the modulation unit includes an intensity modulator, whereas when that is based on a principle of internal modulation, the modulation unit does not include an intensity modulator. The beam splitting unit may include any one of a Y-branch, a star coupler, a multimode interference coupler, a directional coupler, a polarizing beamsplitter, a partially diffractive and partially transmissive waveguide grating.

Optionally, the on-chip emission unit may include an on-chip beam expansion structure and a diffraction structure. The on-chip beam expansion structure may be configured to shape and then output the signal light. The diffraction structure may be configured to irradiate the signal light, after being shaped, onto a target object at the preset divergence angle so as to have the signal light reflected to form multi-angle signal light.

Optionally, the on-chip beam expansion structure may include any one of a thermal insulation inversely tapered waveguide, a planar waveguide concave reflection mirror, a planar waveguide lens based on a waveguide layer with a thickness that gradually changes, a micro-nano-structure based planar waveguide lens with a refractive index that gradually changes, a cascaded beam splitter and a star coupler. The diffraction structure may include a waveguide diffraction grating array or a planar waveguide grating.

Optionally, the on-chip emission unit may include an optical phased array. The optical phased array may include a second beam splitting region, a phased region and an output unit. The second beam splitting region may be used for performing a beam splitting on the signal light and output the split beams from the signal light into the phased region. The phased region may be used for performing phase modulation on the split beams from the signal light. The output unit may be used for outputting the signal light with a modulated phase so as to irradiate signal lights of two dimensions onto the target object.

Optionally, the on-chip emission unit may perform scans, under the control of an exterior scanning device, by means of the signal light in various directions of emission.

Optionally, on-chip optical elements and on-chip electrical elements may be integrated on one chip or respectively on two chips. When integrated respectively on two chips, the two chips may be interconnected via an optical signal or an electrical signal.

Optionally, the array coherent ranging chip may further include any one of a rectangular waveguide, a ridge waveguide and a slot waveguide which are used for transmitting an on-chip optical signal, wherein when the operating wavelength is within the visible band, a platform that is hybrid-integrated on the basis of silicon nitride and silicon may be employed for chip integration, and wherein silicon nitride may be employed as waveguide material, and when the operating wavelength is within the near-infrared band, chip integration may be performed on the basis of a silicon platform disposed on an insulator.

Provided by a second aspect of embodiments of the present application is an array coherent ranging system which includes a signal processing unit and the array coherent ranging chip according to the first aspect of embodiments of the present application. The signal processing unit is configured to receive the ranging signals output by the array coherent ranging chip and calculate a distance from the target object by a spectrum analysis.

Technical solutions provided by embodiments of the present application have effects as follows:

The array coherent ranging chip provided by embodiments of the present application implements the laser ranging by employing the form of a chip, whereof the structure is compact, the reliability is high, and the cost in ranging is reduced. In a way of coherent ranging that employs reference signal and reflected signal at the same time, generated ranging signal is in direct proportion to the product of amplitudes of the reference light and the signal light, and therefore the choice of a proper reference power can implement the control on signal amplitude, thereby the range of ranging is able to be extended, and besides, a component with a wavelength different from the light source is not able to form stable interference signal, thereby providing the effect of ambient light interference resistance. In addition, receiving multi-angle reflected lights by means of a reception array enables parallel processing of data on multiple pixels, thereby the number of points collected per unit time can be greatly increased in comparison with scanning coherent LiDARs/radars.

Array coherent ranging systems provided by embodiments of the present application can perform a ranging of the distance from a target object, whereof the structure is simple and the cost is low, and can enable miniaturization and SoPC (System on a Programmable Chip), whereby the integration can be facilitated. In addition, the ranging systems employ the way of coherent detection, thereby enabling signal amplification, besides, a component with a wavelength different from the light source is not able to form stable interference signal, thereby providing the effect of ambient light interference resistance.

**Brief Description of the Drawings**

For more clearly describing the technical solutions in detailed embodiments of the present application or in the related art, the accompanying drawings, which are needed for describing the detailed embodiments or the related art, will be briefly introduced hereinafter, Apparently, the accompanying drawings described below refer to some embodiments of the present application, and other drawings can be acquired on the basis of the accompanying drawings illustrated herein, by those skilled in the art without making any creative effort.

FIG. 1 is a block diagram of structure of an array coherent ranging chip in an embodiment of the present application.
FIG. 2 is a block diagram of structure of an array coherent ranging chip in another embodiment of the present application.
FIG. 3 is a block diagram of structure of a reception unit of an array coherent ranging chip in an embodiment of the present application.
FIG. 4 is a block diagram of structure of an array coherent ranging system in an embodiment of the present application.
FIG. 5 is a schematic diagram of modulation of an array coherent ranging chip in an embodiment of the present application.
FIG. 6 is a block diagram of structure of a coherent ranging chip in yet another embodiment of the present application.
FIG. 7 is a block diagram of structure of a coherent ranging chip in still another embodiment of the present application.

**Detailed Description of Embodiments**

A description of technical solutions of the present application will be presented in a clear and complete fashion hereinafter by reference to the accompanying drawings. Apparently, the embodiments described herein are not all but some of the embodiments of the present application. Any other embodiment that can be acquired, on the basis of the embodiments described in the present application, by those skilled in the art without making any creative effort, shall be encompassed within the scope of protection of the present application.

In the description of the present application, it should be noted that orientations or positional relationships indicated by the terms "center", "upper", "lower", "left", "right", "vertical", "horizontal", "inside", "outside" and the like are based on orientations or positional relationships shown in the drawings, and are merely to facilitate and simplify the description, rather than indicating or implying devices or elements that are referred to must have a particular orientation, or must be constructed or operated in a particular orientation, and thus, these terms cannot be understood as limitations to the present application. In addition, the terms "first", "second" and "third" are used for descriptive purposes only, and are not to be understood as indicating or implying the relative importance.

In the description of the present application, it should be noted that, unless otherwise specified or defined clearly, the terms "installed", "connected", "coupled" should be broadly understood, for instance, it may be a fixed connection, a detachable connection or an integral connection, may be a mechanical connection or an electrical connection, may be a direct connection or an indirect connection via an intermediate medium, or otherwise may be an interior communication between two elements, and may be a wireless connection or a wired connection. For those skilled in the art, specific meanings of the above terms in the present application can be understood according to the specific circumstances thereof.

Moreover, technical features involved in different embodiments of the present application described hereinafter can be combined with one another, unless mutually contradicted.

EMBODIMENT 1

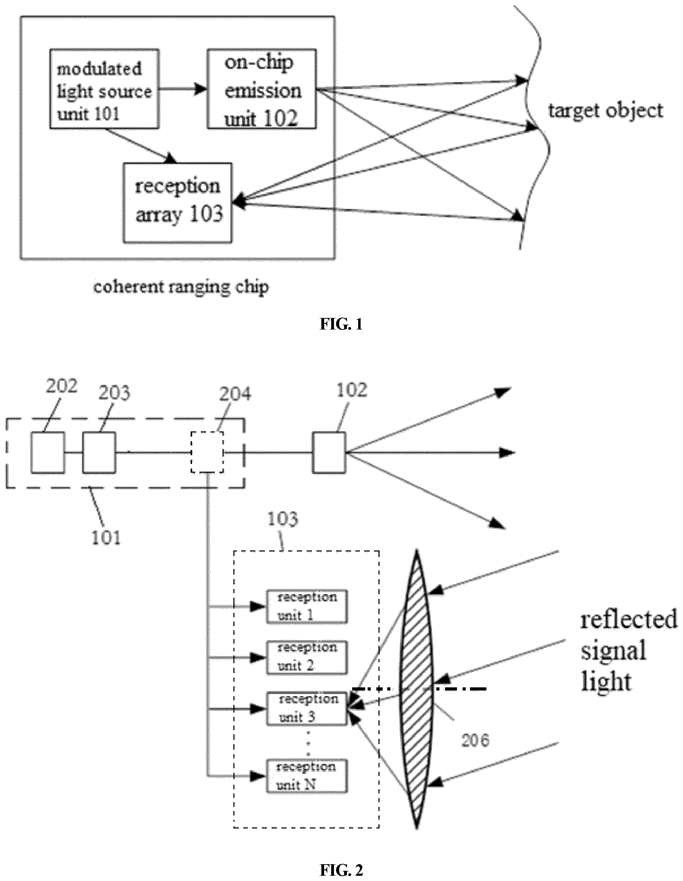

Provided by embodiments of the present application is an array coherent ranging chip, as shown in FIG. 1, which includes a modulated light source unit 101, an on-chip emission unit 102 and a reception array 103. The modulated light source unit 101 is used for generating a modulated light beam and splitting the modulated light beam into signal light and reference light, and then outputting the signal light and the reference light. The on-chip emission unit 102 is used for irradiating the signal light onto a target object at a preset divergence angle so as to have the signal light reflected to form multi-angle signal light. The reception array 103 is used for receiving the reference light and the multi-angle signal light and respectively performing conversion and detection on both the reference light and the signal light of each angle so as to obtain a plurality of ranging signals.

An array coherent ranging chip provided by this embodiment of the present application implements the laser ranging by employing the form of a chip, whereof the structure is compact, the reliability is high, and the cost in ranging is reduced. In a way of coherent ranging that employs reference signal and reflected signal at the same time, generated ranging signal is in direct proportion to the product of amplitudes of the reference light and the signal light, and therefore the choice of a proper reference power can implement the control on signal amplitude, thereby the range of ranging is able to be extended, and besides, a component with a wavelength different from the light source is not able to form stable interference signal, thereby providing the effect of ambient light interference resistance. In addition, receiving multi-angle reflected lights by means of a reception array enables parallel processing of data on multiple pixels, thereby the number of points collected per unit time can be greatly increased in comparison with scanning coherent LiDARs/radars.

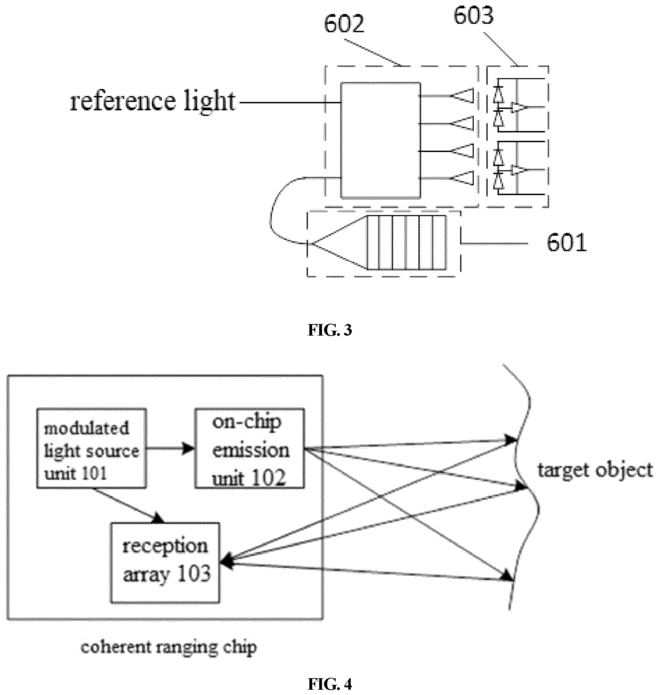

In some embodiments, as shown in FIGs. 2 and 3, the reception array 103 includes a plurality of reception units. Each of the reception units includes a diffraction structure 601, a light combination assembly 602 and a sensor 603. The diffraction structure 601 is configured to receive reflected light of a corresponding angle and guides the reflected light of the corresponding angle to an input end of the light combination assembly 602. The light combination assembly 602 is configured to receive the reference light and the reflected light of the corresponding angle, combine the reference light and the reflected light of the corresponding angle into a composite signal, and divide the composite signal into a first detection signal and a second detection signal. The sensor 603 is configured to receive the first detection signal and the second detection signal, convert the first detection signal and the second detection signal into electric signals, and output a difference between the electric signals to obtain the ranging signals.

To be specific, the light combination assembly 602 may convert the incident reference light $E_{Lo}$ and the reflected light $E_S e^{i\varphi}$ of the corresponding angle to form four mixed signals with amplitudes respectively of

$$\sqrt{2}(E_S - E_{LO})/2 , \sqrt{2}(E_S + E_{LO})/2 , \sqrt{2}(E_S + iE_{LO})/2 \text{ and } \sqrt{2}(E_S - iE_{LO})/2$$ as output, wherein the first two and the last two of the four mixed signals may each form a group of signals respectively with phase differences of 0 degree and 180 degrees. The four signals output by the light combination assembly 602 may be received by the sensor of the reception unit, wherein the two groups of signals respectively with phase differences of 0 degree and 180 degrees may each form a balanced detection by a signal circuit of the sensor 603. Therefore, the first detection signal and the second detection signal may each contain two sub-signals, and the two sub-signals of each detection signal may be respectively input into two input ports of the balanced detector. The sensor may convert the incident light signals into electric signals. After an acquisition of the difference values being performed on the two groups of signals, the high frequency component and the direct-current component may be filtered, then the two groups of signals may be amplified and output, and then the difference values of signals respectively from the two groups of signals may be squared and summed so as to obtain an output signal, thereby the impact of phase on signals can be removed by filtering.

Optionally, the implementation of the light combination assembly 602 may include but not limited to a diffractive optical element, a diffraction grating, a metasurface, a Y-branch, a multimode interference coupler, a directional coupler, a star coupler and a polarizing beamsplitter. The diffraction structure 601 may include a one-dimensional or two-dimensional diffractive optical element, such as a waveguide diffraction grating array or a planar waveguide grating. The sensor 603 may be composed of four detection arrays which are in one-to-one correspondence with four output signals of the light combination assembly 602. The sensor 603 may include any one of an avalanche photodiode, a photomultiplier tube and a PIN diode.

In some embodiments, the reception array may further include a first beam splitting region. The first beam splitting region may include a plurality of beam splitting units. The first beam splitting region may receive the reference light and perform a beam splitting thereon, and then respectively transmit the split beams from the reference light into the light combination assembly of each of the reception units. To be specific, the signal light reflected by the target object may include multi-angle reflected lights, and therefore the reference light can be evenly split and transmitted into each of the reception units of the reception array by means of beam splitting, thereby being used as intrinsic light.

In some embodiments, the modulated light source unit may include a modulation unit and a beam splitting unit. The modulation unit may include a light source and a signal generator. The way of modulation of the light source may include an external modulation or an internal modulation. When the amplitude modulation is implemented based on a principle of external modulation, the modulation unit may include an intensity modulator, whereas when that is based on a principle of internal modulation, the modulation unit may not include an intensity modulator. The range of the central wavelength of the light source within the modulated light source unit 101 may be 400 nm to 3000 nm and may include visible light to the near-infrared band. Optionally, when being based on external modulation, as shown in FIG. 2, the modulated light source unit 101 includes the light source 202, a modulator 203, a signal generator (not shown) and a beam splitting unit 204.

To be specific, various kinds of waveguide, such as a rectangular waveguide, a ridge waveguide, a slot waveguide may be disposed on a chip and be used for beam transmission. When choosing the light sources of different wavebands, different waveguides may be chosen to implement different wavebands, for example, silicon on insulator (SOI) may be chosen for the near-infrared band, silicon nitride may be chosen as the material of waveguide for the visible band, i.e., a platform that is hybrid-integrated on the basis of silicon nitride and silicon may be chosen.

The modulation unit may perform a modulation on the output light beam of the light source so as to generate the light beam with a time-varying wavelength or a time-varying amplitude modulation frequency, of which the types of modulation may include any one of chirped amplitude modulation (CAM) or frequency modulation continuous wave (FMCW). To be specific, the modulation unit may include but not limited to Mach-Zehnder Interferometer (MZI), ring resonator interferometer, tunable optical attenuator, etc. In addition, the beam splitting unit may include any one of a Y-branch, a star coupler, a multimode interference coupler, a directional coupler, a polarizing beamsplitter, a partially diffractive and partially transmissive waveguide grating.

In some embodiments, the on-chip emission unit includes an on-chip beam expansion structure and a diffraction structure. The on-chip beam expansion structure may be configured to shape and then output the signal light. The diffraction structure may be configured to irradiate the signal light, after being shaped, onto a target object at the preset divergence angle so as to have the signal light reflected to form multi-angle signal light. To be specific, the on-chip beam expansion structure may include any one of a thermal insulation inversely tapered waveguide, a planar waveguide concave reflection mirror, a planar waveguide lens based on a waveguide layer with a thickness that gradually changes, a micro-nano-structure based planar waveguide lens with a refractive index that gradually changes, a cascaded beam splitter and a star coupler. The diffraction structure may include a waveguide diffraction grating array or a planar waveguide grating.

Optionally, an off-chip scanning device may be disposed outside the chip, which may be used for scanning the signal light output by the on-chip emission unit. The off-chip scanning device may be a MEMS micromirror or a transmission/reflection optical phased array (OPA). The off-chip scanning device may perform a scanning of the direction of emission of the signal light so as to implement dynamic partial-angle-of-view ranging.

In addition, a corresponding guiding structure unit may be further disposed to guide multi-angle reflected lights reflected by the target object into the reception array. To be specific, as shown in FIG. 2, the guiding structure may be set as a Fourier lens 206, and may focus signal lights reflected in various directions respectively onto corresponding reception units, thereby allowing each one of the reception units to correspond to one angle of view of the target object so as to perform a detection on the shape and location of the target object.

In some embodiments, an optical phased array may be disposed directly at the on-chip emission unit. The optical phased array may include a second beam splitting region, a phased region and an output unit. The second beam splitting region may be used for performing a beam splitting on the signal light and output the split beams from the signal light into the phased region. The phased region may be used for performing phase modulation on the split beams from the signal light. The output unit may be used for outputting the signal light with a modulated phase so as to irradiate signal lights of two dimensions onto the target object.

To be specific, the signal light split from the beam splitting unit may enter a second beam splitting region via a waveguide, evenly enter each channel of the phased region, and then enter a phase modulator in each channel of the phased region, thereby separately controlling phase distribution in each channel via the phase modulator in each channel of the phased region. The deflection in one direction of the output unit of the optical phased array may be implemented by controlling the phase distribution among the respective channels of the optical phased array. In addition, by using the chromatic dispersion property of the output unit of the optical phased array and by adjusting the change in the output wavelength, the deflection in the other direction may be implemented. Accordingly, the scanning functionality of the coherent ranging chip in two dimensions may be implemented. By controlling the number of channels and the parameters of structure of the optical phased array, high-quality light beam can be easily implemented, the sidelobe suppression can be achieved, and as compared to a MEMS micromirror, the optical phased array can be integrated on a ranging chip more easily.

Optionally, an output unit may be implemented by employing the grating structure. In terms of the signal light output by the beam splitting unit, by controlling the phase modulator and modulating the duty ratio of the output unit, the deflection of the signal light in two directions can be respectively implemented, thereby implementing the scanning by the signal light in two directions.

EMBODIMENT 2

Provided by embodiments of the present application is an array coherent ranging system, as shown in FIG. 4, which includes a signal processing unit 104 and the array coherent ranging chip provided by the foregoing embodiment, wherein the signal processing unit is configured to receive the ranging signals output by the array coherent ranging chip and calculate a distance from the target object by a spectrum analysis.

To be specific, if the waveform of the output light beam of the light source is a triangular wave, then the wavelength/amplitude chirp modulation parameters of the light source of the coherent ranging chip, the distance-from-the-target $R$ and the velocity $v$ satisfy the following relation:

$$R = \frac{cT_0(f_{Sig+} + f_{Sig-})}{8B}$$

$$v = \frac{\lambda_0 \Delta f}{2} = \frac{\lambda_0(f_{Sig+} - f_{Sig-})}{2}$$

where, c is the speed of light in vacuum, $\lambda_0$ is the central wavelength in vacuum, $f_{Sig}$ is the frequency of signal, $B$ is the wavelength or amplitude chirp modulation frequency bandwidth of the light source, $T_0$ is the modulation cycle; $\Delta f$ is the difference between the rising edge signal frequency $f_{Sig+}$ and the falling edge signal frequency $f_{Sig-}$.

Array coherent ranging systems provided by embodiments of the present application can perform a ranging of the distance from a target object, whereof the structure is simple and the cost is low, and can enable miniaturization and SoPC (System on a Programmable Chip), whereby the integration can be facilitated. In addition, the ranging systems employ the way of coherent detection, thereby enabling signal amplification, besides, a component with a wavelength different from the light source is not able to form stable interference signal, thereby providing the effect of ambient light interference resistance.

EMBODIMENT 3

FIG. 2 shows a schematic diagram of the structure of an array coherent ranging chip provided by an embodiment of the present application, which includes a modulated light source unit 101, an on-chip emission unit 102 and a reception array 103. The modulated light source unit 101 includes a light source 202, a modulator 203 and a beam splitting unit 204. The reception array 103 includes N reception units.

The light beam output by the light source 202 may be modulated by the modulator 203, then be split into two parts by the beam splitting unit 204, wherein one part may directly arrive at each of the reception units of the reception array as the reference light, whereas the other part may be used as the signal light to pass through the on-chip emission unit 102 and be output, and irradiates onto the target object at a large angle of divergence, of which, after the reflected light being processed by a corresponding guiding structure unit, signal lights reflected in various directions may be received respectively by N reception units in the reception array 103. Each of the reception units is in correspondence with one angle of view of the target object. Then, the signals of the reference light and the reflected light may be converted into electric signals by the light combination assembly and the balanced detector of the on-chip reception unit. And information of the distance from the object and the location of the object may be obtained by a signal processing unit. In addition, an optical component for controlling the intensity of the light beam may be disposed on the chip, such as an optical component for controlling the intensity or frequency of the signal output from the light source, or an optical component that is capable of being used for controlling the intensity of the signal reflected by the target object and received by the chip.

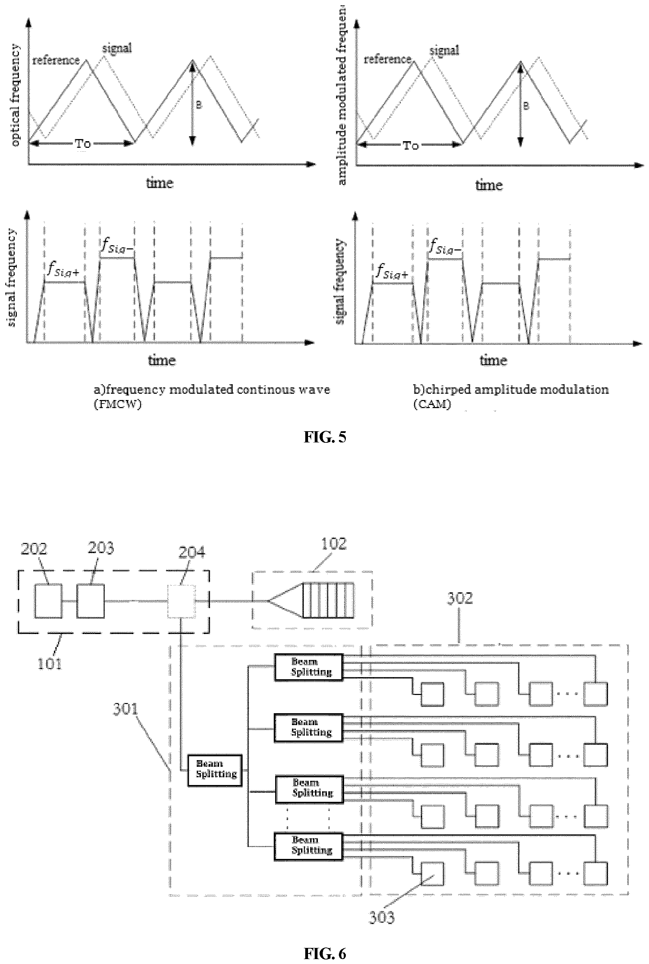

To be specific, the light source 202 may be a laser device or a laser device array. The range of the central wavelength of the light source 202 may be 400 nm to 3000 nm, which may include the visible light to the near-infrared band. The modulator 203 may perform a modulation on the output light beam of the light source so as to generate the light beam with a time-varying wavelength or a time-varying amplitude modulation frequency, of which the types of modulation may include any one of chirped amplitude modulation (CAM) or frequency modulation continuous wave (FMCW), which is shown in FIG. 5. The beam splitting unit 204 may split the modulated light beam respectively into the reference light and the signal light.

To be specific, the modulator 203 may include but not limited to Mach-Zehnder Interferometer (MZI), ring resonator interferometer, tunable optical attenuator, etc. The beam splitting unit 204 may include but not limited to a Y-branch, a star coupler, a multimode interference coupler (MMI), a directional coupler, a polarizing beamsplitter, a partially diffractive and partially transmissive waveguide grating, etc.

The on-chip emission unit 102 includes an on-chip beam expansion structure and a diffraction structure. The on-chip beam expansion structure may shape the output signal light, then the signal light may be irradiated at a large angle of divergence by the diffraction structure and form the reflected signal light on the target object. The on-chip beam expansion structure may include any one of a thermal insulation inversely tapered waveguide, a planar waveguide concave reflection mirror, a planar waveguide lens based on a waveguide layer with a thickness that gradually changes, a micro-nano-structure based planar waveguide lens with a refractive index that gradually changes, a cascaded beam splitter and a star coupler. The diffraction structure may include a waveguide diffraction grating array or a planar waveguide grating.

Each of the reception units in the reception array 103 may include a diffraction structure, a light combination assembly and a sensor. The reflected signal light may need to be processed by a corresponding guiding structure unit before entering the reception array 103. For instance, a Fourier lens 206 may focus the signal lights reflected in various directions respectively onto corresponding N reception units, thereby allowing each of the reception units to correspond to one angle of view of the target object so as to perform a detection on the shape and location of the target object.

The signal light reflected at a large angle of divergence passes through the Fourier lens 206, which allows the signal lights reflected in various directions to be focused onto the corresponding reception units, thereby implementing one-to-one correspondence between the signal lights reflected in various directions and the reception units, which can improve the utilization rate of the reflected signal light, and be conducive to reducing the total power required by the ranging chip and extending the ranging distance.

EMBODIMENT 4

FIG. 6 shows a schematic diagram of the structure of an array coherent ranging chip provided by an embodiment of the present application. In the embodiment, the modulated light source unit 101 is composed of a light source 202, a modulator 203 and a beam splitting unit 204. In addition, the modulated light source unit 101 may include a signal generator (not shown).

In an embodiment of the present application, the light source 202 may be a narrow linewidth laser device with a central wavelength of 1550 nm. The output light of the laser device may be modulated by the modulator 203, of which the modulation frequency is distributed as a triangular wave over time. Then, the modulated light beam may be divided into two paths by the beam splitting unit 204, wherein one path may be the signal light that is emitted from the on-chip emission unit 102 (which is a grating in this embodiment of the present application) and irradiates towards the target object at a large angle of divergence, whereas the other path may be the reference light that passes through the reception array and enter each of the reception units respectively as the reference light. The reception array may include a beam splitting region 301 and a reception module 302. The beam splitting region 301 may be composed of beam splitting units which sequentially and evenly splits and transmits the reference light into each of the reception units of the reception module 302 in order to be used as the intrinsic light. The reception module 302 may be composed of M×N reception units 303.

In an embodiment of the present application, the on-chip emission unit 102 may perform, by adding an off-chip scanning device such as a MEMS micromirror or a transmission/reflection optical phased array (OPA), a scanning of the direction of emission of the signal light so as to implement dynamic partial-angle-of-view ranging.

In an embodiment of the present application, the structure of the reception unit 303, as shown in FIG. 3, is composed of a diffraction structure 601, a light combination assembly 602, and a sensor 603. The diffraction structure 601 may receive the reflected signal light and guide the reflected light of a specific angle into an input end of the light combination assembly in correspondence with a specific unit in the reception array. The light combination assembly 602 may receive the reflected signal light as well as the reference light that has been input, combine the reference light and the reflected signal light into a composite signal, and divide the composite signal into the first detection signal and the second detection signal. The sensor 603 may be configured to receive the first detection signal and the second detection signal, convert the first detection signal and the second detection signal into electric signals, and output a difference between the electric signals to obtain the ranging signals.

To be specific, the one-to-one correspondence between the signal lights reflected in various directions and the M×N reception units 303 may be implemented by performing proper adjustments on the parameters of the gratings in the M×N reception units 303, thereby inputting the signal lights reflected in various directions into corresponding light combination assemblies 602 to mix the reflected signal light with the reference light. Then, a difference value processing may be performed by the sensor 603 to obtain the signals of distance and location. In this embodiment, the sensor may be composed of 2×2 balanced detectors, and optical sensing devices in the 2×2 balanced detection arrays may be based on SPAD, APD, PIN photoelectric sensor.

To be specific, the light combination assembly 602 and the sensor 603 in the reception array of the chip may be integrated on the same chip, or otherwise, alternatively, be integrated separately on two chips, with an optic or electric connection therebetween.

To be specific, the functionality of the light combination assembly 602 may convert the incident reference light $E_{Lo}$ and the reflected light $E_S e^{i\varphi}$ of the corresponding angle to form four mixed signals with amplitudes respectively of

$$\sqrt{2}(E_S - E_{LO})/2 , \sqrt{2}(E_S + E_{LO})/2 , \sqrt{2}(E_S + iE_{LO})/2 \text{ and } \sqrt{2}(E_S - iE_{LO})/2 \text{ as output, wherein the}$$

first two and the last two of the four mixed signals may each form a group of signals respectively with phase differences of 0 degree and 180 degrees. The four signals output by the light combination assembly may be received by the sensor 603 of the reception unit, wherein the two groups of signals respectively with phase differences of 0 degree and 180 degrees may each form a balanced detection by a signal circuit of the sensor.

In terms of the FMCW solution, in which the wavelength of the light source varies linearly with time, the intensity difference between the two groups of output signals of the light combination assembly is $dI = 4E_SE_{LO}cos(\varphi)$, where, $\varphi$ = $\omega t$ exhibits variation over time in the form of a sawtooth wave function or a trigonometric function, and thus the signal intensity difference $dI$ is a sinusoidal signal of which the amplitude is directly proportional to the amplitude of the intrinsic light and the amplitude of the signal light. In terms of the CAM solution, in which the light source amplitude chirp frequency varies linearly with time, the low-frequency component of the intensity difference between the two groups of output signals of the light combination assembly is directly proportional to $E_{L0}E_Scos(\varphi)$, and thus the signal intensity difference is a sinusoidal signal of which the amplitude is directly proportional to the amplitude of the intrinsic light and the amplitude of the signal light, as well.

In terms of the aforementioned two ways of modulation on the light source, the movement of the target object may superpose Doppler shift onto the reflected signal, which may lead to frequency differences at the frequency rising edge and at the frequency falling edge in the signal that is generated by the coherence with and the superposition onto the reference light, which is shown in FIG. 5. Then the incident light signals may be converted into electric signals by the sensor 603.

After an acquisition of the difference values being performed on the two groups of signals, the high frequency component and the direct-current component may be filtered, then the two groups of signals may be amplified and output, and then the difference values of signals respectively from the two groups of signals may be squared and summed so as to obtain an output signal, thereby the impact of phase on signals can be removed by filtering. Lastly, the signal processing unit may receive ranging signals output by the array coherent ranging chip and calculate a distance from the target object by a spectrum analysis.

EMBODIMENT 5

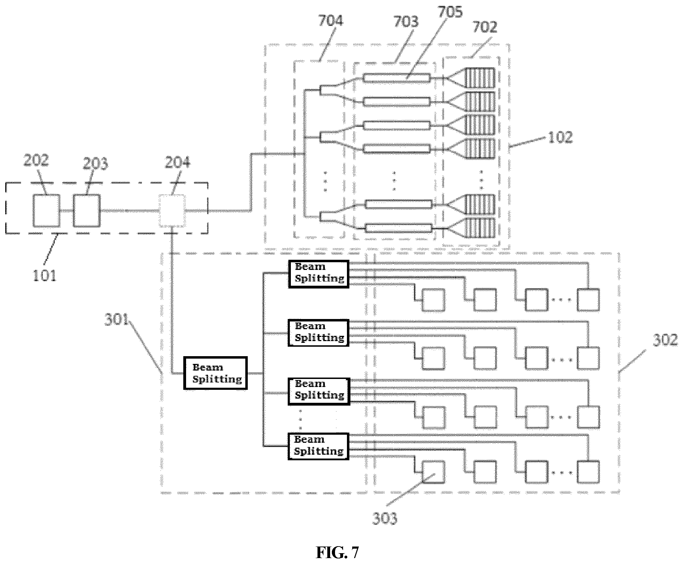

Fig.7 shows a schematic diagram of the structure of an array coherent ranging chip provided by an embodiment of the present application. In this embodiment, the modulated light source unit 101 is composed of a light source 202, a modulator 203 and a beam splitting unit 204.

In an embodiment of the present application, the output light of the light source 202 may be modulated by a modulator 203. Then, the modulated light beam may be divided into two paths by the beam splitting unit 204, wherein one path may be the signal light that is emitted from the on-chip emission unit 102 and irradiates towards the target object at a large angle of divergence, whereas the other path may be the reference light that passes through the reception array and enter each of the reception units respectively as the reference light. The reception array may include a beam splitting region 301 and a reception module 302. The beam splitting region 301 may be composed of multiple beam splitting units which sequentially and evenly splits and transmits the reference light into each of the reception units of the reception module 302 in order to be used as the intrinsic light. The reception module 302 may be composed of M×N reception units 303.

In an embodiment of the present application, the on-chip emission unit 102 may be composed of optical phased arrays (OPAs). The signal light split from the beam splitting unit 204 may pass through a waveguide and enter the beam splitting region 704 of the phased array, and then enter the phased region 703 of the phased array, which is connected to each channel of the phased array, thereby separately controlling the phase distribution in each channel via a phase modulator 705 in each channel of the phased region. The deflection in one direction of the output unit 702 of the optical phased array may be implemented by controlling the phase distribution among the respective channels of the optical phased array. In addition, by using the chromatic dispersion property of the output unit 702 of the optical phased array, the deflection of the signal light in the other direction may be implemented. Accordingly, the scanning functionality of the coherent ranging chip in two dimensions may be implemented. By controlling the number of channels and the parameters of structure of the optical phased array, high-quality light beam can be easily implemented, the sidelobe suppression can be achieved, and as compared to a MEMS micromirror, the optical phased array can be integrated on a ranging chip more easily.

In an embodiment of the present application, the structure of the reception unit 303, as shown in FIG. 3, is composed of a diffraction structure 601, a light combination assembly 602, and a sensor 603. The diffraction structure 601 may receive the reflected signal light and guide the reflected light of a specific angle into an input end of the light combination assembly in correspondence with a specific unit in the reception array. The light combination assembly 602 may receive the reflected signal light and as well as the reference light that has been input, combine the reference light and the reflected signal light into a composite signal, and divide the composite signal into the first detection signal and the second detection signal. The sensor 603 may be configured to receive the first detection signal and the second detection signal, convert the first detection signal and the second detection signal into electric signals, and output a difference between the electric signals to obtain the ranging signals. Then, the signal processing unit may receive the ranging signal output by the array coherent ranging chip and calculate a distance from the target object by a spectrum analysis.

Although the exemplary embodiments and the advantages thereof have been described in detail herein, various alternations, substitutions and modifications may be made to the embodiments by those skilled in the art without departing from the gist of the present application and the scope of protection as defined by the appended claims, and such alternations and modifications all fall into the scope defined by the appended claims. As for other examples, it may be easily appreciated by those skilled in the art that the sequence of the process steps may be changed without departing from the scope of the present application.

In addition, the scope, to which the present application is applied, is not limited to the process, mechanism, manufacture, material composition, means, methods and steps of the specific embodiments described in the present specification. Those skilled in the art should readily appreciate from the disclosure of the present application that the process, mechanism, manufacture, material composition, means, methods and steps currently existing or to be developed in future, which perform substantially the same functions or achieve substantially the same results as that in the corresponding embodiments described in the present application, may be applied according to the present application. Therefore, the appended claims of the present application are intended to include these process, mechanism, manufacture, material composition, means, methods and steps within the scope of protection thereof.

## Claims

1. An array coherent ranging chip, **characterized in**, comprising a modulated light source unit, an on-chip emission unit and a reception array,

   the modulated light source unit is used for generating a modulated light beam and splitting the modulated light beam into signal light and reference light, and then outputting the signal light and the reference light;
   the on-chip emission unit is used for irradiating the signal light onto a target object at a preset divergence angle so as to have the signal light reflected to form multi-angle signal light; and
   the reception array is used for receiving the reference light and the multi-angle signal light and respectively performing conversion and detection on both the reference light and the signal light of each angle so as to obtain a plurality of ranging signals.

2. The array coherent ranging chip according to claim 1, **characterized in that**, the reception array comprises a plurality of reception units, and each of the reception units comprises a diffraction structure, a light combination assembly and a detector sensor, and wherein

   the diffraction structure is configured to receive reflected light of a corresponding angle and guides the reflected light of the corresponding angle to an input end of the light combination assembly;
   the light combination assembly is configured to receive the reference light and the reflected light of the corresponding angle, combine the reference light and the reflected light of the corresponding angle into a composite signal, and divide the composite signal into a first detection signal and a second detection signal; and
   the sensor is configured to receive the first detection signal and the second detection signal, convert the first detection signal and the second detection signal into electric signals, and output a difference between the electric signals to obtain the ranging signals.

3. The array coherent ranging chip according to claim 2, **characterized in that**,

   the diffraction structure comprises a one-dimensional or two-dimensional diffractive optical element;
   the light combination assembly comprises any one of a diffractive optical element, a diffraction grating, a metasurface, a Y-branch, a multimode interference coupler, a directional coupler, a star coupler and a polarizing beamsplitter;
   the sensor comprises any one of an avalanche photodiode, a photomultiplier tube and a PIN diode.

4. The array coherent ranging chip according to claim 1, **characterized in that**, the modulated light source unit comprises a modulation unit and a beam splitting unit, and wherein

   the modulation unit comprises a light source and a signal generator, the light source has a modulation manner which is external modulation or internal modulation, when based on a principle of external modulation, the modulation unit comprises an intensity modulator, whereas when based on a principle of internal modulation, the modulation unit does not comprise an intensity modulator; and

the beam splitting unit comprises any one of a Y-branch, a star coupler, a multimode interference coupler, a directional coupler, a polarizing beamsplitter, a partially diffractive and partially transmissive waveguide grating.

5. The array coherent ranging chip according to claim 1, **characterized in that**, an operating wavelength range of the modulated light source unit comprises a visible band and a near-infrared band.

6. The array coherent ranging chip according to claim 1, **characterized in that**,

the on-chip emission unit comprises an on-chip beam expansion structure and a diffraction structure, and wherein the on-chip beam expansion structure is configured to shape and then output the signal light; and the diffraction structure is configured to irradiate the signal light, after being shaped, onto a target object at the preset divergence angle so as to have the signal light reflected to form multi-angle signal light.

7. The array coherent ranging chip according to claim 6, **characterized in that**,

the on-chip beam expansion structure comprises any one of a thermal insulation inversely tapered waveguide, a planar waveguide concave reflection mirror, a planar waveguide lens based on a waveguide layer with a thickness that gradually changes, a micro-nano-structure based planar waveguide lens with a refractive index that gradually changes, a cascaded beam splitter and a star coupler; and the diffraction structure comprises a waveguide diffraction grating array or a planar waveguide grating.

8. The array coherent ranging chip according to any one of claims 1 to 7, **characterized in that**, on-chip optical elements and on-chip electrical elements are integrated on one chip or respectively on two chips, and wherein when integrated respectively on two chips, the two chips are interconnected via an optical signal or an electrical signal.

9. The array coherent ranging chip according to claim 5, **characterized in**, further comprising any one of a rectangular waveguide, a ridge waveguide and a slot waveguide which are used for transmitting an on-chip optical signal, wherein

when the operating wavelength is within the visible band, a platform that is hybrid-integrated on the basis of silicon nitride and silicon is employed for chip integration, wherein silicon nitride is employed as waveguide material; and
when the operating wavelength is within the near-infrared band, chip integration is performed on the basis of a silicon platform disposed on an insulator.

10. An array coherent ranging system, **characterized in**, comprising a signal processing unit and the array coherent ranging chip according to any one of claims 1 to 9, wherein
the signal processing unit is configured to receive the ranging signals output by the array coherent ranging chip and calculate a distance from the target object by a spectrum analysis.

**FIG. 1**

**FIG. 2**

602    603

reference light

601

**FIG. 3**

modulated
light source
unit 101

on-chip
emission
unit 102

reception
array 103

target object

coherent ranging chip

**FIG. 4**

a)frequency modulated continous wave (FMCW)

b)chirped amplitude modulation (CAM)

**FIG. 5**

**FIG. 6**

**FIG. 7**

## INTERNATIONAL SEARCH REPORT

| | International application No. |
|---|---|
| | **PCT/CN2020/127983** |

**A.    CLASSIFICATION OF SUBJECT MATTER**

G01S 17/32(2020.01)i;  G01S 7/4911(2020.01)i;  G01S 7/4914(2020.01)i

According to International Patent Classification (IPC) or to both national classification and IPC

**B.      FIELDS SEARCHED**

Minimum documentation searched (classification system followed by classification symbols)

G01S 7/-

Documentation searched other than minimum documentation to the extent that such documents are included in the fields searched

Electronic data base consulted during the international search (name of data base and, where practicable, search terms used)

CNPAT, CNKI, WPI, EPODOC: 国科光芯(海宁)科技股份有限公司, 激光, 测距, 雷达, 发射, 接收, 芯片, 片上, 衍射, 光栅, 扫描, lidar, laser, radar, chip, diffraction, grating

**C.      DOCUMENTS CONSIDERED TO BE RELEVANT**

| Category* | Citation of document, with indication, where appropriate, of the relevant passages | Relevant to claim No. |
|---|---|---|
| X | CN 110678774 A (DENSO CORPORATION) 10 January 2020 (2020-01-10) description paragraphs [0040]-[0086], [0112]-[0114], [0133], figures 1, 12, 15-16 | 1-10 |
| X | CN 106415309 A (HRL LABORATORIES, L.L.C.) 15 February 2017 (2017-02-15) description, paragraphs [0020]-[0034] | 1-10 |
| A | CN 110174661 A (ZHEJIANG UNIVERSITY) 27 August 2019 (2019-08-27) entire document | 1-10 |
| A | US 2020116837 A1 (SILC TECHNOLOGIES, INC.) 16 April 2020 (2020-04-16) entire document | 1-10 |
| A | CN 109991582 A (SHANGHAI JIAO TONG UNIVERSITY) 09 July 2019 (2019-07-09) entire document | 1-10 |
| A | CN 110109083 A (SHANGHAI JIAO TONG UNIVERSITY) 09 August 2019 (2019-08-09) entire document | 1-10 |

☐ Further documents are listed in the continuation of Box C.          ☑ See patent family annex.

| * | Special categories of cited documents: |
|---|---|
| "A" | document defining the general state of the art which is not considered to be of particular relevance |
| "E" | earlier application or patent but published on or after the international filing date |
| "L" | document which may throw doubts on priority claim(s) or which is cited to establish the publication date of another citation or other special reason (as specified) |
| "O" | document referring to an oral disclosure, use, exhibition or other means |
| "P" | document published prior to the international filing date but later than the priority date claimed |

| "T" | later document published after the international filing date or priority date and not in conflict with the application but cited to understand the principle or theory underlying the invention |
|---|---|
| "X" | document of particular relevance; the claimed invention cannot be considered novel or cannot be considered to involve an inventive step when the document is taken alone |
| "Y" | document of particular relevance; the claimed invention cannot be considered to involve an inventive step when the document is combined with one or more other such documents, such combination being obvious to a person skilled in the art |
| "&" | document member of the same patent family |

| Date of the actual completion of the international search | Date of mailing of the international search report |
|---|---|
| **08 June 2021** | **25 June 2021** |

| Name and mailing address of the ISA/CN | Authorized officer |
|---|---|
| **China National Intellectual Property Administration (ISA/ CN)** **No. 6, Xitucheng Road, Jimenqiao, Haidian District, Beijing 100088** **China** | |
| Facsimile No. **(86-10)62019451** | Telephone No. |

Form PCT/ISA/210 (second sheet) (January 2015)

**INTERNATIONAL SEARCH REPORT**
Information on patent family members

International application No.

**PCT/CN2020/127983**

| Patent document cited in search report | | | Publication date (day/month/year) | Patent family member(s) | | | Publication date (day/month/year) |
|---|---|---|---|---|---|---|---|
| CN | 110678774 | A | 10 January 2020 | JP | 6743761 | B2 | 19 August 2020 |
| | | | | WO | 2018221060 | A1 | 06 December 2018 |
| | | | | US | 2020088876 | A1 | 19 March 2020 |
| | | | | JP | 2018200273 | A | 20 December 2018 |
| CN | 106415309 | A | 15 February 2017 | CN | 106461785 | A | 22 February 2017 |
| | | | | EP | 3161511 | A1 | 03 May 2017 |
| | | | | CN | 106415309 | B | 30 July 2019 |
| | | | | US | 2015378012 | A1 | 31 December 2015 |
| | | | | US | 9575162 | B2 | 21 February 2017 |
| | | | | EP | 3161520 | A1 | 03 May 2017 |
| | | | | EP | 3161511 | B1 | 26 February 2020 |
| | | | | US | 2015378011 | A1 | 31 December 2015 |
| | | | | US | 9310471 | B2 | 12 April 2016 |
| | | | | WO | 2015199735 | A1 | 30 December 2015 |
| | | | | CN | 106461785 | B | 19 January 2018 |
| | | | | WO | 2015199736 | A1 | 30 December 2015 |
| CN | 110174661 | A | 27 August 2019 | None | | | |
| US | 2020116837 | A1 | 16 April 2020 | US | 2020116842 | A1 | 16 April 2020 |
| | | | | WO | 2020076566 | A1 | 16 April 2020 |
| | | | | WO | 2020076565 | A1 | 16 April 2020 |
| CN | 109991582 | A | 09 July 2019 | WO | 2020181630 | A1 | 17 September 2020 |
| CN | 110109083 | A | 09 August 2019 | US | 2021018599 | A1 | 21 January 2021 |
| | | | | WO | 2020224007 | A1 | 12 November 2020 |

Form PCT/ISA/210 (patent family annex) (January 2015)